(19) **Europäisches Patentamt**

**European Patent Office**

**Office européen des brevets**

(11) Veröffentlichungsnummer : **0 347 559 B1**

## (12) EUROPÄISCHE PATENTSCHRIFT

(45) Veröffentlichungstag der Patentschrift :
**15.01.92 Patentblatt 92/03**

(51) Int. Cl.⁵ : **B62L 1/16**

(21) Anmeldenummer : **89107604.4**

(22) Anmeldetag : **27.04.89**

(54) **Selbstverstärkende Felgenbremse für Fahrräder.**

(30) Priorität : **22.06.88 CH 2400/88**

(43) Veröffentlichungstag der Anmeldung :
**27.12.89 Patentblatt 89/52**

(45) Bekanntmachung des Hinweises auf die
Patenterteilung :
**15.01.92 Patentblatt 92/03**

(84) Benannte Vertragsstaaten :
**AT BE CH DE ES FR GB IT LI LU NL SE**

(56) Entgegenhaltungen :
**DE-B- 1 116 558**
**FR-A- 900 660**
**US-A- 4 055 235**

(73) Patentinhaber : **GEBRÜDER PLETSCHER AG**
**Obere Schilling 414**
**CH-8460 Marthalen (CH)**

(72) Erfinder : **Pletscher, Oskar**
**Obere Schilling 414**
**CH-8460 Marthalen (CH)**

(74) Vertreter : **Patentanwälte Schaad, Balass &**
**Partner**
**Dufourstrasse 101 Postfach**
**CH-8034 Zürich (CH)**

EP 0 347 559 B1

## Beschreibung

Die vorliegende Erfindung betrifft eine selbstverstärkende Felgenbremse für Fahrräder, gemäss dem Oberbegriff des Patentanspruches 1.

Eine solche Felgenbremse ist aus der FR-PS 900660 (Fig. 7 und 8) bekannt. Bei dieser bekannten Felgenbremse sind beide Arme der Bremszange um einen gemeinsamen Schwenkzapfen nicht nur schwenkbar, sondern auch in einer zur Schwenkebene etwa rechtwinkligen Ebene kippbar, damit die Rollen auf den Schrägflächen zum Zuge kommen und sich damit eine Verstärkung der Bremskraft ergibt. Das für die Kippbarkeit der Arme notwendigerweise vorzusehende Spiel zwischen dem Schwenkzapfen und den diesen umgebenden Bohrungen in den beiden Armen der Bremszange führt dazu, dass die über einen Bowden-Zug und über an den Armen der Bremszange angeformte Ausleger herbeigeführte Schwenkbewegung dieser Arme nicht notwendigerweise gegensinnig synchron verläuft. Ausserdem sind die an den Gabelholmen befestigten Schrägflächen und die darauf abgestützten Rollen der Arme auf der Höhe der Bremsschuhe angeordnet. Dies hat zur Folge, dass die Länge der Hebelarme zwischen dem Schwenkzapfen und den Bremsschuhen einerseits und jenes zwischen dem Schwenkzapfen und den Schrägflächen bzw. den Rollen, d.h. dort wo das Mittel zur Verstärkung der Bremskraft angreift, andererseits etwa gleich lang sind. Dies wiederum hat zur Folge, dass die Bemessung der Rückholfeder, die die Bremsschuhe nach Freigabe des Bowden-Zuges in ihre Ausgangsstellung bringen sollte, sehr heikel ist. Wird diese Feder zu weich bemessen, bleibt die Bremse auch bei Freigabe des Bowden-Zuges in ihrer Bremsstellung, d.h. die Bremsschuhe verkeilen sich zwischen den Schrägflächen und bleiben verkeilt, bis die Drehrichtung der gebremsten Felge umgekehrt wird, was in der Praxis sinnvollerweise gar nicht durchführbar ist. Wird dagegen diese Rückholfeder zu hart bemessen, dann wird nicht nur die am Bowden-Zug aufzuwendende Kraft grösser, sondern es ist auch die verstärkende Wirkung der Schrägflächen in Frage gestellt.

Ähnliches lässt sich von der Felgenbremse sagen, die aus der DE-PS 1116558 (Fig. 3) bekannt ist. Bei dieser Felgenbremse sind die Arme der Bremszange um einen gemeinsamen Bolzen verschwenkbar und zusätzlich längs dieses Bolzens gegen die Wirkung einer um den Bolzen gewickelten Druckfeder verschiebbar. Die beiden Bremsschuhe weisen eine Fassung auf, in der ein Bremsklotz verankert ist. Diese Fassung ist über eine an ihr angeformte Schrägfläche an einem der Holme des Fahrradrahmens abgestützt. Wenn bei dieser Bremse die Bremsklötze an das gegenüberliegende Felgenhorn angedrückt werden, haben die Arme der Bremszange die Tendenz, sich gegen die Wirkung der Druckfeder längs des Bolzens zu verschieben. Diese Verschiebung hat zur Folge, dass die Bremsschuhe durch das Zusammenwirken der an der Fassung angeformten Schrägfläche mit dem entsprechenden Rahmenholm stärker an das Felgenhorn angepresst werden. Wird die Bremse gelöst, soll die Druckfeder die Arme der Bremszange in die Ausgangslage zurückschieben. Wie aber die Praxis erwiesen hat, ist auch bei dieser bekannten Felgenbremse die Bemessung der Druckfeder problematisch. Wird sie zu weich bemessen, dann verkeilen sich die Arme der Bremszange zwischen den Holmen des Rahmens mit dem Ergebnis, dass das Rad blockiert wird und blokkiert bleibt, selbst wenn die Bremse gelöst wird. Wird dagegen die Druckfeder zu hart bemessen, kommt die selbstverstärkende Wirkung durch das Zusammenwirken der Schrägflächen mit den Holmen kaum zustande. Dazu kommt, dass die selbstverstärkende Wirkung auch von der Reibung zwischen den an der Fassung angeformten Schrägflächen und dem entsprechenden Holm abhängig ist. Diese Reibung ist unter anderem auch von der Witterung und vom momentanen Verschmutzungsgrad abhängig.

Aufgabe der Erfindung ist es daher, eine Felgenbremse der eingangs genannten Art derart zu verbessern, dass die selbstverstärkende Wirkung praktisch unabhängig von der Bemessung einer Feder ist und bei allen Witterungen weitestgehend gleich bleibt.

Diese Aufgabe ist bei der vorgeschlagenen Felgenbremse dadurch gelöst, dass sie die im Kennzeichen des Patentanspruches 1 angegebenen Merkmale aufweist.

Merkmale bevorzugter Ausführungsformen sind in den abhängigen Ansprüchen umschrieben.

Die Erfindung ist nachstehend rein beispielsweise anhand der Zeichnung näher erläutert. Es zeigt :

Fig. 1      eine Ansicht einer Ausführungsform einer Hinterrad-Felgenbremse ;

Fig. 2      eine Draufsicht in Richtung des Pfeiles II in Fig. 1 ; und

Fig. 3      eine Seitenansicht in Richtung des Pfeiles III der Bremse der Fig. 1 unter Weglassung gewisser Teile.

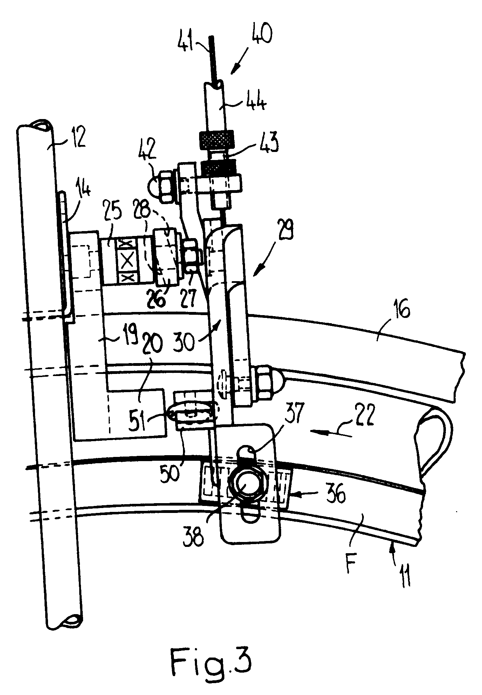

Man erkennt in der Zeichnung die beiden zur nichtdargestellten Nabe des Hinterrades 11 eines Fahrrades führenden Holme 12, 13 des Fahrradrahmens. Diese Holme 12, 13 sind miteinander durch eine angeschweisste Befestigungsplatte 14 verbunden. Der Fig. 3 ist zu entnehmen, dass die Platte 14 einen abgebogenen, zwischen die Holme 12, 13 sich erstreckenden Lappen aufweist, an den mittels eine Schraubverbindung 15 das dem Hinterrad 11 zugeordnete Schutzblech 16 befestigt ist.

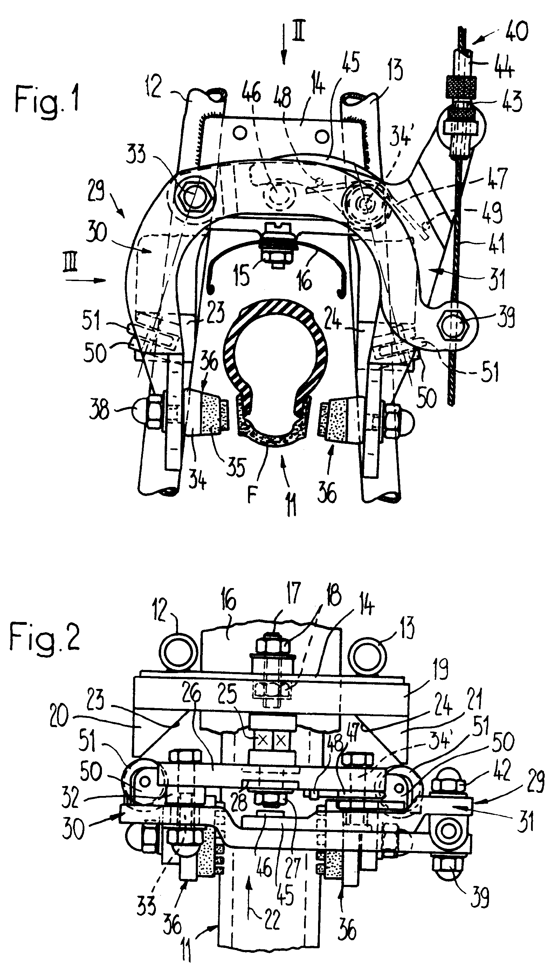

An der zu den Holmen 12, 13 parallelen Flachseite der Platte 14 ist mittels eines zentralen Schraubbolzens 17 und Muttern 18 ein kräftiger, im wesentlichen die Form eines auf den Kopf gestellten U aufweisenden Bügels 19 festgeklemmt. Die (unteren) Enden der Schenkel des Bügels 19 sind mit daran befestigten oder daran angeformten Keilstücken 20, 21 (Fig. 2) versehen. Diese Keilstücke 20, 21 besitzen dem Hinterrad 11 zugekehrte und in dessen durch den Pfeil 22 angegebener Drehrichtung konvergierende, ebene Schrägflächen 23, 24 auf. Diese Schrägflächen schliessen mit der Ebene des Hinterrades 11 je einen Winkel von etwa 45° ein.

Der Schraubbolzen 17 ist über den Bügel 19 hinaus verlängert und trägt ein Zwischen- oder Distanzstück 25, durchsetzt dann eine auf das Distanzstück 25 folgende Brücke 26, die mit einer Mutter 27 arretiert ist. Die vom Bolzen 17 durchsetzte Mittenbohrung (ohne Bezugsziffer) in der Brücke 26 hat gegenüber dem Bolzen 17 Spiel und endet beiderends in ebenen Ausfräsungen 28. Dadurch ist die Brücke 26 beschränkt um eine zur Zeichenebene der Fig. 3 rechtwinklige Achse im Uhrzeigersinn kippfähig.

Die Brücke 26 trägt die eigentliche Bremszange 29, deren Arme in Fig. 1 und 2 mit 30 und 31 bezeichnet sind. Der Arm 30 ist um einen im einen Ende der Brücke 26 verankerten und ein Distanzstück 32 durchsetzenden Zapfen 33 verschwenkbar. Der Arm 31 dagegen ist um einen im anderen Ende der Brücke 26 verankerten Zapfen 34' verschwenkbar. Im Gegensatz zu den herkömmlichen Felgenbremsen sind hier also die Arme 30, 31 der Bremszange 29 nicht um einen gemeinsamen Schwenk- oder Gelenkzapfen verschwenkbar.

Der Arm 30 hat die Form eines gekrümmten, zweiarmigen Hebels, an dessem Ende ein aus Fassung 34 und Bremsklotz 35 bestehender Bremsschuh 36 auf einstellbare Weise mittels einer ein Langloch 37 (Fig. 3) durchsetzenden Schraubverbindung 38 verankert ist. Am anderen Ende des Armes 30 ist eine Klemmschraube 39 für das Ende eines Kabels 41 eines zur Betätigung der Bremse vorgesehenen Bowden-Zuges 40 vorhanden.

Der Arm 31 der Bremszange 29 ist ebenfalls im Prinzip ein zweiarmiger, um den Zapfen 34' verschwenkbarer Hebel, der an seinem unteren Ende einen Bremsschuh 36 trägt, der wie der Bremsschuh 36 am Arm 30 ausgebildet und befestigt ist. Am anderen Ende trägt der Arm 31 die mit einer Schraubverbindung 42 verankerte, regel- und feststellbare Fassung 43 für die Kabelhülle 44 des Bowden-Zuges 40. Ausserdem ist der Arm 31 mit einer angeformten Verlängerung 45 versehen, die einen kurzen, am Arm 30 befestigten Stift 46 über greift. Diese Anordnung gewährleistet eine gegensinnige Synchronisation der Schwenkbewegung der Arme 30 und 31.

Um den Schwenkzapfen 34' ist in einer Windung eine Biegefeder 47 mit abstehenden Enden gewickelt. Das eine Ende der Biegefeder 47 ist auf einem von der Brücke 26 abstehenden Stift 48 abgestützt, während das andere Ende auf einen am Arm 31 auf seiner der Brücke 26 zugekehrten Seite verankerten Stift 49 (Fig. 1) abgestützt ist. Damit wirkt die Biegefeder 47 als Rückholfeder und zwar für den Arm 31 unmittelbar und für den Arm 30 über die Verlängerung 45 des Arms 31 und den Stift 46 mittelbar.

Die den Holmen 12, 13 zugekehrten Flachseiten der Arme 30, 31 sind im Bereich zwischen den Bremsschuhen 36 und den jeweiligen Schwenkzapfen 33 bzw. 34' mit Lageraugen 50 versehen, in denen Rollen 51 frei drehbar gelagert sind. Dabei ist die am Arm 30 vorhandene Rolle 51 auf der Schrägfläche 23 abgestützt, jene am Arm 31 auf der Schrägfläche 24. Die Drehachsen der Rollen 51 sind, wie sich aus Fig. 1 ergibt, nach den Schwenkzapfen 33 bzw. 34' des betreffenden Armes der Bremszange 29 ausgerichtet. Wird nun die Bremse mittels des Bowden-Zuges 40 angezogen, wird (in Fig. 1) der Arm 30 im Gegenuhrzeigersinn und der Arm 31 im Uhrzeigersinn gegen die Wirkung der Biegefeder 47 verschwenkt. Die Bremsklötze 35 der Bremsschuhe 36 gelangen in Berührung mit den seitlichen Flachseiten oder Felgenhörnern der Felge F des Hinterrades 11. Die Bremsschuhe 36 erfahren dabei eine Reibkraft, die dieselbe Richtung hat (Pfeil 22) wie die Drehung des Rades 11. Die Grösse dieser Reibkraft richtet sich nach der zur Betätigung der Bremse aufgewendeten Kraft. Diese Reibkraft veranlasst nun die Brücke 26 zu einer Kippbewegung und mithin die Bremsschuhe zu einer Verschiebung in Richtung des Pfeiles 22. Da aber die Arme 30, 31 im Bereich der Bremsschuhe 36 über die Rollen 51 auf den konvergierenden Schrägflächen 23, 24 abgestützt sind, wird dadurch die Anpresskraft der Bremsklötze 35 an die Seitenflächen der Felge selbsttätig und ohne äusseren Kraftaufwand verstärkt. Zwischen den Armen 30, 31 und den zugeordneten Schrägflächen 23, 24 ist dank der Rollen 51 die Reibung auf einen Mindestwert verringert. Zur Verschiebung der Bremsschuhe 36 in Drehrichtung sind nicht die gesamten Arme 30, 31 zu verschieben, sondern es genügt, die Kippbewegung der Brücke 26. Zum Lösen der Bremsschuhe 36 vom Eingriff mit der Felge F genügt die Rückholfeder 47, die auch dafür sorgt, dass die Kippbewegung der Brücke 26 rückgängig gemacht wird.

**Patentansprüche**

1. Selbstverstärkende Felgenbremse für Fahrräder, mit einem Paar einander gegenüberliegenden Bremsschuhen (36), die dazu bestimmt sind, je mit einer gegenüberliegenden Seitenfläche einer Felge (F) zusammen zu wirken und die je am Endbereich eines Armes (30, 31) einer Bremszange (29) verankert sind, wobei die beiden Arme (30, 31) der Bremszange (29) gegen die Wirkung einer Rückholfeder (47) gemeinsam in einer zur Reibkraftrichtung (22) im wesentlichen rechtwinkligen Ebene verschwenkbar und die Bremsschuhe (36) ausserdem in einer zur Schwenkebene rechtwinkligen Richtung beschränkt verschiebbar sind, wobei die Arme (30, 31) je mit einer in Richtung der Reibkraft (22) konvergierenden Schrägfläche (23, 24) zusammenwirken, um im Zuge der Verschiebung der Bremsschuhe (36) verstärkt gegen die entsprechende Seitenfläche der Felge (F) angepresst zu werden, wobei beide Arme (30, 31) je über eine frei drehbare Rolle (51) auf der zugeordneten, am Fahrradrahmen (12, 13) fest verankerten Schrägfläche (23, 24) abgestützt sind, dadurch gekennzeichnet, dass jeder der Arme (30, 31) um einen eigenen Schwenkzapfen (33, 34′) verschwenkbar ist, dass Mittel (45, 46) vorgesehen sind, um die Schwenkbewegung der Arme (30, 31) zwangsläufig gegensinnig zu steuern und dass die Schrägflächen (23, 24) und die Rollen (51) zwischen den Bremsschuhen (36) und dem jeweiligen Schwenkzapfen (33, 34′) angeordnet sind.

2. Felgenbremse nach Patentanspruch 1, dadurch gekennzeichnet, dass die Drehachse der Rollen (51) im wesentlichen nach der Schwenkachse (33, 34′) des betreffenden Armes (30, 31) der Bremszange (29) ausgerichtet ist.

3. Felgenbremse nach Patentanspruch 1 oder 2, dadurch gekennzeichnet, dass die beiden Schrägflächen (23, 24) eben und symmetrisch zur Radebene angeordnet sind.

4. Felgenbremse nach einem der Patentansprüche 1-3, dadurch gekennzeichnet, dass die Schrägflächen (23, 24) mit der Reibkraftrichtung (22) einen Winkel von etwa 45° einschliessen.

5. Felgenbremse nach einem der Patentansprüche 1-4, dadurch gekennzeichnet, dass die zur Richtung der Reibkraft (22) im wesentlichen parallelen Schwenkzapfen (33, 34′) an einer Brücke (26) befestigt sind, die ihrerseits in einer zur Schwenkebene der Arme (30, 31) rechtwinkligen Ebene beschränkt kippfähig ist, um dadurch die Verschiebung der Endbereiche der Arme (30, 31) in Richtung der Reibkraft (22) zu ermöglichen.

## Claims

1. Self-reinforcing rim brake for bicycles, with a pair of mutually opposite brake shoes (36) which are each intended to interact with an opposite side face of a rim (F) and which are each anchored to the end region of an arm (30, 31) of a brake calliper (29), the two arms (30, 31) of the brake calliper (29) being jointly pivotable, counter to the effect of a restoring spring (47), in a plane essentially at right angles to the direction of frictional force (22), and moreover the brake shoes (36) being displaceable to a restricted extent in a direction at right angles to the pivoting plane, the arms (30, 31) each interacting with a sloping face (23, 24) converging in the direction of frictional force (22), in order, during the displacement of the brake shoes (36), to be pressed against the corresponding side face of the rim (F) in a reinforced manner, the two arms (30, 31) each being supported via a freely rotatable roller (51) on the associated sloping face (23, 24) anchored firmly to the bicycle frame (12, 13), characterised in that each of the arms (30, 31) is pivotable about its own pivot pin (33, 34′), in that there are means (45, 46) provided for controlling the pivoting movement of the arms (30, 31) positively in opposite directions, and in that the sloping faces (23, 24) and the rollers (51) are arranged between the brake shoes (36) and the respective pivot pins (33, 34′).

2. Rim brake according to Patent Claim 1, characterised in that the axis of rotation of the rollers (51) is aligned essentially along the pivoting axis (33, 34′) of the respective arms (30, 31) of the brake calliper (29).

3. Rim brake according to Patent Claim 1 or 2, characterised in that the two sloping faces (23, 24) are plane and are arranged symmetrically relative to the wheel plane.

4. Rim brake according to one of Patent Claims 1 to 3, characterised in that the sloping faces (23, 24) form an angle of approximately 45° with the direction of frictional force (22).

5. Rim brake according to one of Patent Claims 1 to 4, characterised in that the pivot pins (33, 34′) essentially parallel to the direction of frictional force (22) are fastened to a bridge (26) which is itself tiltable to a restricted extent in a plane at right angles to the pivoting plane of the arms (30, 31), in order thereby to allow the displacement of the end regions of the arms (30, 31) in the direction of frictional force (22).

## Revendications

1. Frein autoserreur sur jante de bicyclette, avec un couple de sabots de frein (36) disposés l'un en face de l'autre, conçus pour coopérer chacun avec une surface latérale de la jante (F) placée en face, et ancrés chacun sur la zone d'extrémité d'un bras (30, 31) de mâchoire de frein (29), les deux bras (30, 31) de la mâchoire (29) étant pivotants conjointement, contre l'action d'un ressort de rappel (22), dans un plan sensiblement perpendiculaire à la direction de l'effort de friction (22), les sabots de frein (36) étant en outre déplaçables de façon limitée dans une direction perpendiculaire au plan de pivotement, les bras (30,31) coopérant chacun avec une surface inclinée (23, 24) qui converge en direction de l'effort de friction (22), afin d'être pressés de façon amplifiée au cours du déplacement des sabots de frein (36) contre la surface latérale correspondante de la jante (F), les deux bras (30, 31) prenant chacun appui, par l'intermédiaire d'un galet (51) tournant librement, sur la surface inclinée (23, 24) associée, et étant ancrés rigidement sur le cadre de bicyclette (12, 13), caractérisé en ce que chacun des bras (30, 31) est pivotant autour d'un tourillon de pivotement respectif (33, 34') en ce que des moyens (45, 46) sont prévus pour commander à contresens et obligatoirement le mouvement de pivotement des bras (30, 31), et en ce que les surfaces inclinées (23, 24) et les galets (51) sont disposés entre les sabots de frein (36) et le tourillon de pivotement (33, 34') respectif.

2. Frein sur jante selon la revendication 1, caractérisé en ce que l'axe de rotation des galets (51) est orienté de façon à passer pratiquement par l'axe de pivotement (33, 34') du bras (30, 31) concerné de la mâchoire (29).

3. Frein sur jante selon la revendication 1 ou 2, caractérisé en ce que les deux surfaces inclinées (23, 24) sont planes et disposées symétriquement par rapport au plan de la roue.

4. Frein sur jante selon l'une des revendications 1 à 3, caractérisé en ce que les surfaces inclinées (23, 24) font, avec la direction de l'effort de friction (22), un angle d'à peu près 45°.

5. Frein sur jante selon l'une des revendications 1 à 4, caractérisé en ce que les tourillons de pivotement (33, 34'), sensiblement parallèles à la direction de l'effort de friction (22), sont fixés sur un pont (26), qui est de son côté susceptible de basculer de façon limitée, dans un plan perpendiculaire au plan de pivotement des bras (30, 31), pour permettre de ce fait le déplacement des zones d'extrémité des bras (30, 31), en direction de l'effort de friction (22).

Fig.1

Fig.2

EP 0 347 559 B1

Fig.3

7